# EUROPEAN PATENT APPLICATION

(11) **EP 4 567 134 A1**
(43) Date of publication of application: **11.06.2025**
(21) Application number: 23215248.8
(22) Date of filing: 08.12.2023
(51) Int. Cl.: C21B 3/08, C22B 7/04, C04B 5/00

(54) **METHOD AND INSTALLATION FOR GRANULATING OF METALLURGICAL SLAG**

(71) Applicant: Tata Steel IJmuiden B.V., 1951 JZ Velsen-Noord (NL)
(72) Inventor: Kerkhoven, Frank, 1970 CA IJmuiden (NL); Hage, Johannesendert Teunis, 1970 CA IJmuiden (NL)
(74) Representative: Group Intellectual Property Services

(57) **Abstract**

The invention relates to a method for granulating molten metallurgical slag produced in a ironmaking plant, the method comprising the steps of: injecting granulation water via a water injection device into a flow of molten metallurgical slag and thereby granulating the molten metallurgical slag; collecting the granulation water and the granulated material in a granulation tank; and wherein the granulation water injected into the flow of molten metallurgical slag has a pH of more than 7.5.

## Description

### FIELD OF THE INVENTION

The invention relates to a method of wet granulating of molten material, especially of metallurgical slag, more in particular wet granulating molten slag material such as blast furnace slag produced in an ironmaking facility. The invention relates also to an installation for the wet granulating of molten slag material produced in an ironmaking facility.

### BACKGROUND TO THE INVENTION

The most by-product of an ironmaking process, such as a blast furnace operation, is slag. Between about 0.15 to 0.24 tonnes of blast furnace slag are produced per tonne of pig iron. Nowadays most blast furnaces are equipped with slag granulation plants in which the blast furnace slag is quenched by water.

Water quenching ensures fast solidification of the metallurgical slag, which, in the case of blast furnace slag, is a necessary condition for obtaining a valuable by-product for utilisation in cement industry. Due to the rapid cooling, the slag is converted into a sand-like material. This process is called granulation. According to ASTM C989-19, granulated blast furnace slag (GBFS) is defined as: a glassy granular material formed when molten blast furnace slag is rapidly chilled by immersion in water with or without compositional adjustments made while the blast furnace slag is molten.

A water jet is firstly used to fragmentize the hot liquid slag stream into very small particles and to transfer them into a water bath. The energy form the hot slag is withdrawn through direct contact between the hot liquid slag and the water. As this has to happen at ambient pressure, the temperature of the slag is immediately lowered to a temperature level of below 100°C. During the water granulation process, the sulphur contained in the hot liquid slag, and which predominantly originates from the coal used in the ironmaking process, reacts with the water and generates sulphur dioxide (SO₂) and hydrogen sulphide (H₂S). The quantity of these toxic and malodorous gases is mainly dependent on the chemical composition of the slag and the granulation parameters. The concentrations of both sulphur dioxide and hydrogen sulphide may be too high with regard to the environmental legislation so that appropriate measures have to be taken to lower these emissions to more acceptable concentrations.

It is known that during the wet granulation in which the hot liquid slag is brought into contact at about 1500°C with water (below 100°C) and fragmented by a water jet into small slag particles, a vapour layer is formed between each slag particle and the surrounding water due to the high temperature difference between these substances. This phenomenon is known as "Leidenfrost effect", in which a liquid, in near contact with a mass significantly hotter than the liquid's boiling point, produces an insulating vapour layer, which slows down the cooling process of the slag particles considerably.

It is believed that the sulphurous emissions are mostly formed through disintegration of sulphides (essentially CaS and MnS) in the vapour layer between a slag particle and the liquid water. The reactions leading to the creation of sulphurous emissions take place at temperatures exceeding 400°C, this being due to thermal reasons. The chemical equations for the creation of SO₂ and H₂S can be summarized as follows:

CaS + 3H₂O = CaO + 3H₂+SO₂ (1)

CaS + H₂O = CaO + H₂S (2)

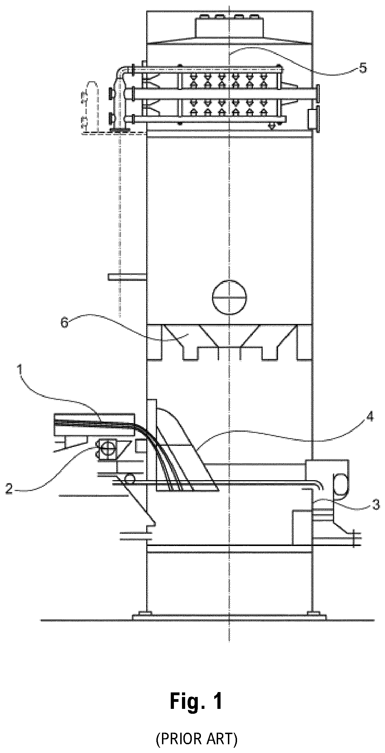

An example of a modern granulation installation of this type, especially for molten blast furnace slag, is illustrated in appended Fig.1 which originates from a paper entitled "INBA Slag granulation system - Environmental process control", published by P. Leyser and C. Cortina in Iron & Steel Technology, issue April 2005, pp. 139-146. As seen in appended Fig.1, this kind of installation typically comprises: a water injection device (also called a blowing box) for injecting granulation water into a flow of molten blast furnace slag, e.g. slag that is received via a runner tip. Thereby, granulation of the molten material is achieved. The installation further has a granulation tank for collecting the granulation water and the granulated material and for cooling down the granules in a large water volume beneath the water injection device. A steam condensation tower, typically having a cylindrical shell closed by a top cover, is located above the granulation tank for collecting and condensing steam generated in the granulation tank. Due to the high temperatures of the molten material and the huge amount of quenching water required, a considerable amount of steam is typically produced by installations according to Fig.1. To avoid pollution by simple emission of steam into the atmosphere, the chimney acts as a steam condensation tower and includes a steam condensing system, typically of the counter-current type. The steam condensing system has a water-spraying device for spraying water droplets into the steam that rises inside the steam condensation tower and a water-collecting device located below the water injection device, for collecting sprayed droplets and condensed steam.

In reference report EUR 25521 EN by the Joint Centre of the European Commission, "Best Available Techniques (BAT) Reference Document for Iron and Steel Production", 2013, doi:10.2791/97469, paragraph 6.2.2.1, page 310-311, it is reported that for plants which operate with fume condensation, H₂S emissions within the range of 1 - 10 g per tonne of hot metal are achievable, and being the average emission over a tapping operation.

Patent document US2013/0292878-A1 discloses a process for granulation of hot liquid slag wherein the hot liquid slag is mixed with solid metallic particles, preferably of 5 to 25 mm diameter, so as to form a solidified, vitrified slag cake mixed with said metallic particles and said slag cake mixed with said metallic particles is discharged in a water bath, wherein the hot liquid slag is poured first into a mould and subsequently the solid metallic particles are poured into the mould containing the hot liquid slag and mixed with solid metallic particles so as to form the solidified, vitrified slag cake. In the example the solid particles were steel balls. The temperature of the slag is much lower than in traditional water granulation (about 700°C vs about 1500°C) when it comes in contact with the water. The lower slag temperature reduces to cooling time for the slag surface and thereby reducing the time frame in which sulphurous emissions may be formed.

Patent document WO2017/093347-A1 discloses a granulation installation for granulating molten material produced in a ironmaking plant, said installation comprising: a water injection device, for injecting granulation water into a flow of molten material and thereby granulating the molten material; a granulation tank for collecting the granulation water and the granulated material; and characterized by a steam condensation system comprising: a steam collecting hood located above the granulation tank for collecting steam generated in the granulation tank, a gas conduit arranged between said steam collecting hood and a water column, a gas compressor arranged within said gas conduit for compressing said steam before feeding it through said water column. In this installation condensation of the steam is not carried out in a large condensation tower but is effected in a water column, preferably in a water column that is already present in the granulation installation. The water recovery tank of the dewatering unit provides the water column needed for condensation of the steam. The pressure created by the gas compressor is sufficient to overcome the pressure of the water column and said gas mix should then rise as bubbles inside the water volume. This movement is said to create a significant surface for efficient condensation and sulphur dissolution. The condensation does no longer take place in a separate condensation tower but it is switched to an already existing water tank and is said to generate better results due to an increased surface for efficient condensation.

Patent document US-7,600,397 discloses a process for granulating slag from a blast furnace or a smelting reduction plant, comprising: feeding a granule/water mixture that was formed during granulation to a granulation tank and then to a dewatering installation, and dewatering the slag granules in the dewatering installation; at least partially condensing the H₂S-containing vapours and gases formed during the granulation by injecting water in a condensation space which is flow-connected to the granulation tank, the water injection being at a water injection point; discharging H₂S-containing residual gases from the condensation space below the water injection point, and burning H₂S from the condensation space, preferably the burning of the H₂S is in a combustion chamber.

There is a demand for methods and corresponding installations further reducing the emission of at least H₂S-containing vapours and gases formed during the wet granulation of molten metallurgical slag produced in an ironmaking plant.

### DESCRIPTION OF THE INVENTION

It is an object of the invention to provide a method for granulating molten metallurgical slag produced in an ironmaking plant for reducing the emission of H₂S as a resultant of the granulation.

It is an object of the invention to provide a granulation installation for granulating molten metallurgical slag produced in an ironmaking plant for reducing the emission of H₂S as a result of the granulation.

These objects and further advantages are met or exceeded by the present invention according to independent claims 1 and 10, and with preferred embodiments set out in the dependent claims and the description.

In order to achieve this object, the present invention proposes, in a first aspect, a method for granulating molten metallurgical slag produced in an ironmaking plant, the method comprising the steps of: creating a flow of molten metallurgical slag; injecting granulation water via a water injection device into the flow of molten metallurgical slag and thereby granulating the molten metallurgical slag into granulated slag, also known in the art as slag sand; collecting the granulation water and the granulated slag in a granulation tank; feeding the mixture of granulated slag and water from the granulation tank to a dewatering installation, e.g. to a dewatering drum, and dewatering the granulated slag in the dewatering installation, and collecting the water from the dewatering installation in a downstream water reservoir, water tank or water basin, and the dewatered granulated slag is transported, e.g. via a belt conveyer, for storage, e.g. onto a stock pile or in storage hoppers; recirculating the water from the downstream water reservoir as granulation water and injecting it via the water injection device into the flow of molten metallurgical slag; and wherein the granulation water injected into the flow of molten metallurgical slag has a pH of more than 7.5.

In accordance with the invention it has been found that where the prior art when operating on an industrial scale of wet slag granulation predominantly focusses on end-of-pipe techniques to limit the emission of H₂S and also of SO₂, that control of the quality granulation water, in particular the pH and more preferably the combination of both pH and Eh, the formation of H₂S can significantly be reduced and as a result the emission of H₂S is reduced.

The approach in accordance with the invention may overcome the need for an end-of-pipe condensation tower or similar approaches, which require considerable CAPEX investments, to remove the H₂S and SO₂. The approach is therefor more cost effective. Although it is envisaged that the combination may still be useful to further reduce the emissions of H₂S and SO₂. In the approach in accordance with the invention there is also no need for the injection of oxidising additives to the liquid slag, e.g. of Fe₂O₃ or KMnO₄, as suggested in the prior art as countermeasure to stabilize sulphur from the slag as sulphate.

A series of industrial scale experiments at blast furnace no.6 at Tata Steel in IJmuiden, NL, has demonstrated that the method according to the invention enables to limit the H₂S emissions within the range of 1 - 10 g per tonne of hot metal as average emission over a tapping operation without the use of any further end-of-pipe purification.

Without being bound to any scientific explanation, it is at present believed that by controlling the pH, and more preferably the combination of both pH and Eh, in the industrial scale environment the conditions are created whereby substantial amounts of HS⁻ ions and SO₄²⁻ ions remain in solution in the granulation water during the wet granulation operation and thereby significant less amounts of H₂S and SO₂ gas will evaporate. By controlling the acidity by adding for example sodium hydroxide, and preferably also by controlling the redox potential for example by adding hydrogen peroxide, the subject sulphur species can be controlled, and the undesirable gaseous emissions of sulphur species can be prevented or at least limited.

In a preferred embodiment the quantity of injected granulation water is controlled as function of the molten metallurgical slag flow rate.

In accordance with the invention the pH of the granulation water injected into the flow of molten metallurgical slag is more than 7.5. In an embodiment the pH of the granulation water is at least 8.0, and more preferably at least 8.2. In an embodiment the pH of the granulation water is not more than about 10, and preferably not more than 9.0.

To further optimise the reduction of emission of the H₂S and SO₂ the Eh of the granulation water is less than 0.20 V, and preferably less than 0.10 V.

In an embodiment the Eh of the granulation water is more than -0.60 V, and preferably more than -0.50 V, and more preferably more than -0.40 V.

pH is a known measure of the acidity or alkalinity of a solution. Whereas Eh is a measure of the redox (oxidation-reduction) state of a solution, or more precisely, its solutes. Eh is a measurement of electrical potential and thus commonly expressed in volts. For the purpose of this invention the pH and Eh of the granulation water are presented at 25°C.

In an embodiment the pH of the granulation water injected into the flow of molten metallurgical slag is regulated by means of the addition of sodium hydroxide (NaOH), and also known as caustic soda. Sodium hydroxide is a common and industry accepted chemical compound and is abundantly available.

In an embodiment the Eh of the granulation water injected into the flow of molten metallurgical slag is regulated by means of the addition of hydrogen peroxide (H₂O₂). The addition of hydrogen peroxide will increase the Eh of the granulation water.

In an embodiment the temperature of the granulation water injected into the flow of molten metallurgical slag is in a range of about 15°C to 95°C, and preferably in a range of about 50 to 95°C.

The method according to this invention can be used for granulating molten metallurgical slag produced in an ironmaking plant into a valuable by-product, e.g. for utilisation in the cement industry, and wherein the ironmaking plant is one of a blast furnace operation, an electric smelting furnace (ESF) operation or a Hlsarna operation.

In a preferred embodiment the ironmaking plant is a blast furnace operation, and thus the method according to this invention concerns the wet granulating of blast furnace slag into granulated blast furnace slag.

In an aspect of the invention it relates to an installation for granulating molten metallurgical slag produced in an ironmaking plant, preferably a blast furnace operation, and for implementing the method according to this invention, wherein said installation comprises: a slag channel **1** for delivering molten metallurgical slag **10** to a granulation device; a water injection device **12** for injecting granulation water **11** into a flow of molten metallurgical slag **10** and thereby granulating the molten metallurgical slag into granulated slag **15;** a granulation tank **3** for collecting or holding granulation water and the granulated slag **15;** a dewatering installation **14,** preferably a dewatering drum, for dewatering the granulated slag in the dewatering installation; at least one downstream water reservoir **16,** water tank or water basin, for collecting and holding the water from the dewatering installation **14** in said downstream water reservoir(s) **16;** the dewatered granulated slag **15** is transported to a storage facility; the downstream water reservoir(s) **16** is/are flow connected with the water injection device **12** for recirculating the water from the downstream water reservoir **16** as granulation water **11** and injecting it via the water injection device **12** into the flow of molten metallurgical slag **10;** and a pH regulator **20** for regulating the pH of the granulation water **11** into a flow of molten metallurgical slag **10** to form granulated slag **15** to a level of more than 7.5, with preferred values as herein described and claimed.

In an embodiment the pH regulator **20** is measuring, in use, either continuously or continually, the pH of the water leaving the downstream water reservoir **16.** In a next step the pH regulator **20** is adapting the pH of the water in said downstream water reservoir **16** to form the granulation water **11** to be injected into a flow of molten metallurgical slag **10** via the water injection device **12.** Preferably the pH is adapted or controlled to the required levels by the pH regulator **20** via the controlled addition of sodium hydroxide to the water, and preferably to the water in the downstream water reservoir **16.**

In an embodiment of the installation it further comprises an Eh regulator configured to measure and to regulate the Eh of the granulation water **11,** preferably to a level less than 0.20 V, and preferably to a level of more than -0.60 V, with more preferred values as herein described and claimed. In an embodiment the Eh regulator is measuring, either continuously or continually, the Eh of the water leaving the downstream water reservoir **16** and adapting the Eh of the water in said downstream water reservoir to form the granulation water to be injected into a flow of molten metallurgical slag **10** via the water injection device **12.** Preferably the Eh is adapted or controlled to the required levels by the Eh regulator by the controlled addition of an oxidizing agent, and more preferably by the controlled addition of hydrogen peroxide to the water, and preferably to the water in the downstream water reservoir **16.**

In an embodiment of the installation it further comprises a condensation device, preferably a condensation tower, which is flow-connected to the granulation tank **3.** Any harmful flue gas of H₂S-containing vapours and gases formed during the granulation of the molten metallurgical slag **10** into granulated slag **15** are extracted into the condensation device and can be processed as is known in the art to further limit the emission of any H₂S and SO₂.

Also the dewatering installation(s) **14** with the water reservoir **16** can be provided with covering hoods, from which a discharge line for any vapours and gases formed in the dewatering installation **14,** which may contain sulphur, leads away, opening out into the condensation device. In this way, harmful flue gases which are not formed as early as in the granulation tank **3,** from where they would rise into the condensation tower, can likewise be fed for processing and purification.

In a further aspect of the invention it relates to an ironmaking plant comprising an installation for granulation of molten metallurgical slag according to this invention. In preferred embodiment the ironmaking plant is a blast furnace operation. In another embodiment the ironmaking plant is an alternative ironmaking route of a combination of a gas based Direct Reduction Plant (DRP) to produce pre-reduced pellets, followed by their smelting in a Electric Smelting Furnace (ESF) to produce hot metal and slag as a by-product. In the context of this invention ESF encompasses specific furnaces such as Reducing Electric Furnaces (REF) and Submerged Arc Furnaces (SAF). In another embodiment the ironmaking plant comprises a "Hlsarna" operation. The HIsarna^{®} (a registered trademark by Tata Steel) process or operation is associated particularly with producing molten iron from iron ore or another iron-containing material. The Hlsarna process and apparatus are described in international application PCT/AU99/00884 (WO-00/022176) and incorporated herein by reference.

### BRIEF DESCRIPTION OF THE FIGURES

The invention will now be explained by means of the following, non-limiting figures.
Fig. 1 shows a granulation installation known in the art;
Fig. 2 shows a schematic of the method and installation according to this invention.

Fig. 1 is taken from patent document WO2017/093347-A1 and shows a granulation installation, especially for molten blast furnace slag, according to the prior art. The known installation concerns a so-called end-of-pipe approach to remove the H₂S and SO₂ that may be formed during the granulation process. The installation comprises: a water injection device 2 for injecting granulation water into a flow of molten blast furnace slag, e.g. slag that is received via a runner tip **1.** Thereby, granulation of the molten material is achieved. The installation further has a granulation tank **3** for collecting the granulation water and the granulated material and for cooling down the granules in a large water volume beneath the water injection device **2.** A steam condensation tower, typically having a cylindrical shell closed by a top cover, is located above the granulation tank for collecting and condensing steam generated in the granulation tank. Due to the high temperatures of the molten material and the amount of quenching water required, a considerable amount of steam is typically produced by installations according to Fig.1. To avoid pollution by simple emission of steam into the atmosphere, the chimney acts as a steam condensation tower and includes a steam condensing system requiring a cooling tower, typically of the counter-current type. The steam condensing system has a water-spraying device **5** for spraying water droplets into steam that rises inside the steam condensation tower and a water-collecting device **6** located below the water injection device **2,** for collecting sprayed droplets and condensed steam.

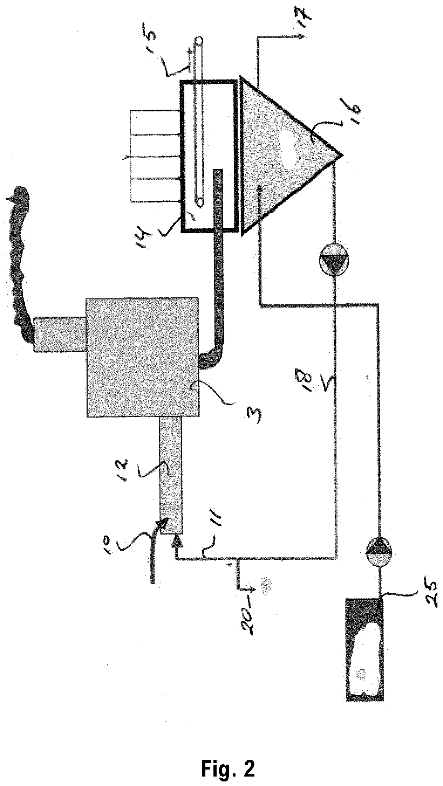

Fig. 2 illustrates schematically an embodiment of the method and installation according to this invention. Molten metallurgical slag **10,** especially molten blast furnace slag, is fed into a granulation device **12** together with granulation water **11,** whereby a water injection device **2** (not shown), e.g. a blowing box, injects the granulation water **11** into the flow of molten metallurgical slag **10.** The mixture of granulated slag and water is collected in a granulation tank **3** and fed to a dewatering installation **14.** In the dewatering installation **14** the mixture is separated into two streams, namely the dewatered granulated slag **15** is transported to a storage facility and the water is collected in a downstream water reservoir **16** comprising an overflow runner system **17.** The water in the downstream water reservoir **16** is flow connected, e.g. via pipes **18,** with the water injection device for recirculating the water from the downstream water reservoir **16** as granulation water **11** and next injecting it into the flow of molten metallurgical slag **10.** A pH regulator **20** is provided between the downstream water reservoir **16** and the water injection device **12** and is measuring the acidity of the water. When the pH is below a level of 7.5, and with preferred ranges set out in the description and the claims, via a dosing system **25** as part of the pH-regulator the pH of the water, in particular the water in the downstream water reservoir **16,** can be increased by the controlled addition of sodium hydroxide to the water. In a similar manner as for the pH regulator **20** advantageously in a preferred embodiment also an Eh regulator (not shown) is part of the method and installation according to this invention.

In accordance with the invention it has been found that where the prior art when operating on an industrial scale of wet slag granulation predominantly focusses on end-of-pipe techniques, see for example Fig. 1, to limit the emission of H₂S and SO₂, that control of the quality granulation water itself, in particular the pH and more preferably the combination of both pH and Eh, the formation of H₂S can significantly be reduced as well as the emission of SO₂.

The above-discussion is intended to be merely illustrative of the present method and should not be construed as limiting the appended claims to any particular embodiment or group of embodiments. Any reference signs in the claims should not be construed as limiting the scope of the appended claims.

## Claims

1. A method for granulating molten metallurgical slag produced in a ironmaking plant, the method comprising the steps of:
injecting granulation water via a water injection device into a flow of molten metallurgical slag and forming granulated slag;
collecting the granulation water and the granulated slag in a granulation tank;
feeding the mixture of granulated slag and water from the granulation tank to a dewatering installation, and dewatering the granulated slag in the dewatering installation and collecting the water in a downstream water reservoir;
recirculating the water from the downstream water reservoir as granulation water and injecting it via the water injection device into the flow of molten metallurgical slag,
and wherein the granulation water injected into the flow of molten metallurgical slag has a pH of more than 7.5.

2. A method according to claim 1, wherein the granulation water injected into the flow of molten metallurgical slag has a pH of more than 8.0.

3. A method according to claim 1 or 2, wherein the granulation water injected into the flow of molten metallurgical slag has a pH of less than 10, and preferably of less than 9.0.

4. A method according to any one of claim 1 to 3, wherein the pH of the granulation water is regulated by means of sodium hydroxide addition.

5. A method according to any one of claim 1 to 4, wherein the granulation water injected into the flow of molten metallurgical slag has an Eh of less than 0.20 V, and preferably of less than 0.10 V.

6. A method according to any one of claim 1 to 5, wherein the granulation water injected into the flow of molten metallurgical slag has an Eh of more than -0.60 V, and preferably of more than -0.50 V.

7. A method according to claim 5 or 6, wherein the Eh of the granulation water is regulated by means of hydrogen peroxide addition.

8. A method according to any one of claim 1 to 7, wherein the granulation water injected into the flow of molten metallurgical slag has a temperature in a range of 15°C to 95°C, and preferably of 50°C to 95°C.

9. A method according to any one of claims 1 to 8, wherein the molten metallurgical slag is formed by molten blast furnace slag.

10. An installation for granulating molten metallurgical slag produced in an ironmaking plant, preferably produced in a blast furnace operation, said installation comprising:
a slag channel for delivering molten metallurgical slag to a granulation device;
a water injection device for injecting granulation water into a flow of molten metallurgical slag to form granulated slag;
a granulation tank for collecting granulation water and granulated slag;
a dewatering installation for dewatering the granulated slag in the dewatering installation;
a transport installation for transporting the dewatered granulated slag to a storage facility;
a downstream water reservoir collecting the water from the dewatering installation in the downstream water reservoir;
the downstream water reservoir is flow connected with the water injection device for recirculating the water from the downstream water reservoir as granulation water and injecting it via the water injection device into the flow of molten metallurgical slag;
and a pH regulator for regulating the pH of the granulation water to a level of more than 7.5.

11. An installation according to claim 10, wherein the pH regulator, in use, is measuring the pH of the water leaving the downstream water reservoir and adapting the pH of the water in said downstream water reservoir to form the granulation water.

12. An installation according to claim 10 or 11, further comprising an Eh regulator for regulating the Eh of the granulation water, preferably to a level less than 0.20 V, and preferably to a level of more than -0.60 V.

13. An installation according to claim 12, wherein the Eh regulator is measuring the Eh of the water leaving the downstream water reservoir and adapting the Eh of the water in said downstream water reservoir to form the granulation water.

14. An ironmaking plant comprising a granulation installation according to any one of claims 10 to 13, and preferably the ironmaking plant comprises one of a blast furnace operation, an Electric Smelting Furnace operation or Hlsarna operation.

15. An ironmaking plant according to claim 14, wherein the ironmaking plant is a blast furnace operation.
